Europäisches Patentamt

(19) European Patent Office

Office européen des brevets

(11) Numéro de publication: **0 054 262**
**B1**

(12) **FASCICULE DE BREVET EUROPEEN**

(45) Date de publication du fascicule du brevet: **21.11.84**

(21) Numéro de dépôt: **81110311.8**

(22) Date de dépôt: **10.12.81**

(51) Int. Cl.³: **G 01 N 33/54,** G 01 N 1/00, B 04 B 5/04

(54) **Dispositif autonome d'analyse simultanée et procédé de mise en oeuvre.**

(30) Priorité: **15.12.80 FR 8026528**

(43) Date de publication de la demande:
**23.06.82 Bulletin 82/25**

(45) Mention de la délivrance du brevet:
**21.11.84 Bulletin 84/47**

(84) Etats contractants désignés:
**AT BE CH DE FR GB IT LI LU NL SE**

(56) Documents cités:
**EP-A-0 027 986**
**GB-A-2 017 910**
**US-A-3 864 089**
**US-A-4 135 883**

(73) Titulaire: **Guigan, Jean**
**9, rue Jean Mermoz**
**F-75008 Paris (FR)**

(72) Inventeur: **Guigan, Jean**
**9, rue Jean Mermoz**
**F-75008 Paris (FR)**

(74) Mandataire: **Weinmiller, Jürgen et al**
**Zeppelinstrasse 63**
**D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

L'invention concerne un dispositif d'analyse, utilisant un support solide d'accrochage destiné à capter successivement une quantité d'un ligand contenu par exemple dans un liquide biologique à analyser, puis une quantité d'un réactif marqué, ledit dispositif comprenant un rotor d'analyse comportant d'une part une pluralité de cellules périphériques, contenant chacune ledit support d'accrochage, munies d'un orifice périphérique d'éjection de liquide, et d'autre part des moyens permettant l'acheminement d'un liquide de lavage vers chacune desdites cellules.

Les techniques actuelles utilisent un support solide d'accrochage qui est usuellement une bille sphérique en polystyrène recouvert d'une protéine ayant des propriétés de type anticorps (par exemple un polypeptide provenant d'un animal vacciné). Das les dispositifs antérieurs ce support est disposé dans un récipient de type tube à essais dans lequel est admis le liquide à analyser. Après un temps d'incubation approprié, il faut procéder à un lavage énergique, à l'eau, de la bille pour enlever l'excès de composé, lequel lavage est opéré manuellement ainsi que l'évacuation du liquide en retournant le tube dont l'extrémité ouverte présente des pattes évitant l'éjection de la bille; cette opération doit être renouvelée avec le réactif dont l'excès est de nouveau évacuée par lavage, après quoi le tube est transporté vers un poste d'analyse proprement dite, par exemple pour une analyse photocolorimétrique en injectant un réactif coloré adéquat.

Autant le principe de la bille d'accrochage captant successivement et ligand et le réactif est simple et performant, autant la technique utilisée donne peu de satisfactions: en effet, les operations de lavage effectuées manuellement sont peu fiables en raison de l'hétérogénéité des lavages et des conditions de température, et sont impropres à une analyse par tests groupés avec des dosages différents en raison des nombreuses manipulations qui sont nécessaires.

C'est pourquoi la demande de brevet européen 0027 986, déposée mais non publiée antérieurement à la date de priorité de la présente demande, propose un dispositif plus fiable, de conception simple, et parfaitement adapté à une analyse simultanée avec plusieurs dosages, avec le minimum de manipulations.

Ce dispositif antérieur est constitué d'un rotor d'analyse comportant d'une part une pluralité de cellules périphériques contenant chacune un support d'accrochage, et d'autre part des moyens permettant l'acheminement d'un liquide de lavage vers chaque cellule, chacune desdites cellules étant munie d'un orifice périphérique d'éjection de liquide, et présentant une portion supérieure munie d'un orifice d'admission de composé et réactif.

Les moyens permettant l'acheminement du liquide de lavage sont essentiellement constitués par un orifice central d'admission duquel partent des conduits radiaux reliant ledit orifice central à chacune des cellules périphériques; de préférence, les conduits radiaux sont dans un plan essentiellement perpendiculaire à l'axe de rotation du dispositif.

Le fonctionnement de ce dispositif est le suivant:

Le rotor est disposé sous un dispositif d'alimentation, de façon à injector dans chaque cellule par un orifice supérieur, un volume calibré d'un liquide tel que sérum, plasma ou tout autre liquide biologique contenant la substance à analyser; après cette injection, on laisse reposer pendant le temps d'incubation nécessaire.

Le rotor est ensuite mis en rotation et on injecte du liquide de lavage par l'orifice central. A la sortie des conduits radiaux, on prévoit avantageusement des moyens formant chicanes de manière à bien diriger le liquide de lavage vers le fond de la cellule. Pour chaque cellule, la centrifugation a pour effet d'éjecter l'excès de composé non accroché au support solide par l'orifice périphérique.

Après le lavage on peut procéder facultativement à un séchage en coupant l'admission du liquide de lavage tout en maintenant la centrifugation.

Ces opérations sont ensuite réitérées avec un réactif, qui a la propriété de se fixer sur le début de chaîne édifiée lors de l'incubation.

Après nouvelle incubation, élimination de l'excès non fixé, lavage, séchage, on procède à une lecture par un compteur dans le cas où le réactif était marqué par un isotope; si le marquage était dû à une enzyme on ajoute une quantité calibrée de substrat qui provoquera une réaction colorée qui sera lue directement dans la cellule par un photomètre.

L'inconvénient de ce dispositif, par ailleurs performant, est que, pour assurer le remplissage des cellules en composé et réactifs, il est nécessaire de le placer devant des dispositifs d'alimentation appropriés, tels que des pipettes, contenant lesdits liquides et réactifs, ce qui limite son autonomie de fonctionnement.

C'est un but de l'invention de prévoir un dispositif d'analyse du type décrit ci-dessus, dans lequel l'alimentation des cellules en liquide à analyser et réactifs est réalisée, sans utilisation de pipettes, par des moyens le rendant autonome.

L'invention a pour objet un dispositif d'analyse utilisant un support solide d'accrochage destiné à capter successivement une quantité d'un ligand contenu par exemple dans un liquide biologique à analyser, puis une quantité d'un réactif marqué, ledit dispositif comprenant un rotor d'analyse comportant d'une part une pluralité de cellules périphériques, contenant chacune ledit support d'accrochage, munies d'un orifice périphérique d'éjection de liquide, et d'autre part des moyens permettant l'acheminement d'un liquide de lavage vers chacune desdites cellules, caractérisé par le fait qu'à chaque cellule contenant le support d'accrochage est associée une cellule dite de déversement, ladite cellule, recevant au moins successivement le liquide à analyser et le réactif et présentant une paroi commune avec la cellule contenant le support d'accrochage, un passage entre les deux cellules étant prévu au niveau de cette paroi, ledit réactif étant contenu dans un récipient approprié supporté par le dispositif d'analyse, des moyens étant prévus pour assurer l'ouverture dudit récipient et le déversement du réactif dans la cellule de déversement.

L'invention a également pour objet un procédé de mise en oeuvre du dispositif décrit ci-dessus, caractérisé par le fait que le liquide contenant la substance à analyser étant introduit par centrifugation dans une cellule de déversement, on stoppe la centrifugation permettant ainsi le déversement de toute la quantité de composé introduite vers la cellule contenant le support d'accrochage, puis après un temps approprié d'incubation, on élimine l'excès de liquide et on procède à un lavage, par injection d'un liquide de lavage et centrifugation dans un sens contraire à celui intervenant lors du remplissage des cellules de déversement, après séchage éventuel on procède au remplisage par centrifugation des cellules de déversement par un premier réactif contenu dans un récipient supporté par le dispositif, puis, par arrêt de la centrifugation, au transvasement du réactif vers la cellule contenant le support d'accrochage, ensuite, par centrifugation, à l'élimination de l'excès du réactif et à un lavage éventuellement suivi d'un séchage, ces dernières opérations pouvant être reprises avec un deuxième réactif.

L'invention sera décrite plus en détail à l'aide de deux exemples de réalisation et du dessin annexé dans lequel:

La figure 1 est une vue schématique de dessus d'un premier mode de réalisation de l'invention avec arrachement partiel au niveau d'un couple de cellules juxtaposées associées;

La figure 2 est une vue partielle en perspective conformément à la figure 1;

La figure 3 est une vue en élévation selon la flèche F de la figure 2;

La figure 4 est une coupe selon la ligne IV—IV de la figure 3;

La figure 5 est une coupe selon V—V de la figure 3;

La figure 6 est une vue schématique en perspective d'un couple de cellules juxtaposées associées faisant partie du dispositif selon la figure 1;

La figure 7 est une vue partielle en perspective du couple de cellules selon la figure 6;

La figure 8 est une coupe partielle au niveau de la partie centrale du dispositif d'analyse selon la figure 1;

La figure 9 est une vue partielle en perspective d'un autre mode de réalisation de l'invention montrant un couple de cellules superposées associées;

La figure 10 est une coupe d'un couple de cellules superposées associées passant par les conduits radiaux d'alimentation des cellules;

La figure 11 est une coupe selon la ligne XI—XI de la figure 10;

La figure 12 est une coupe selon la ligne XII—XII de la figure 9;

La figure 13 est une coupe d'un couple de cellules superposées associées, au niveau de la ligne XIII—XIII de la figure 9;

La figure 14 est une vue partielle en élévation avec partie centrale du dispositif semi-coupée.

Sur ces figures, le dispositif d'analyse illustré, conforme à l'invention est essentiellement constitué d'un rotor 1 comportant une pluralité de cellules périphériques d'analyse 2, contenant chacune un support d'accrochage 3.

Dans les exemples représentés ce support est constitué par une bille d'accrochage (par exemple en polystyrène recouvert d'un composant ayant des propriétés de type anticorps.

Toutefois, à la place d'une seule bille, on pourrait utiliser une pluralité de petites billes présentant par exemple un diamètre de l'ordre de 10 à 20 microns. Dans ce cas on interposerait dans les cellules une barrière apte à retenir dans celles-ci les billes au cours de la rotation du dispositif, cette barrière étant encastrée ou collée dans des échancrures appropriées. Avantageusement, une telle barrière est du type filtre moléculaire.

Le support solide d'accrochage peut également être constitué par un revêtement approprié déposé sur une portion inférieure de la paroi des cellules 2.

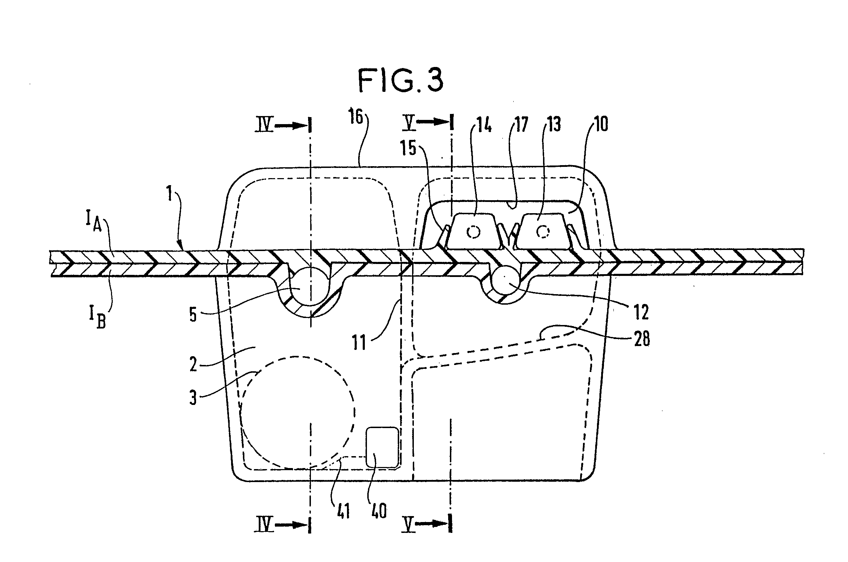

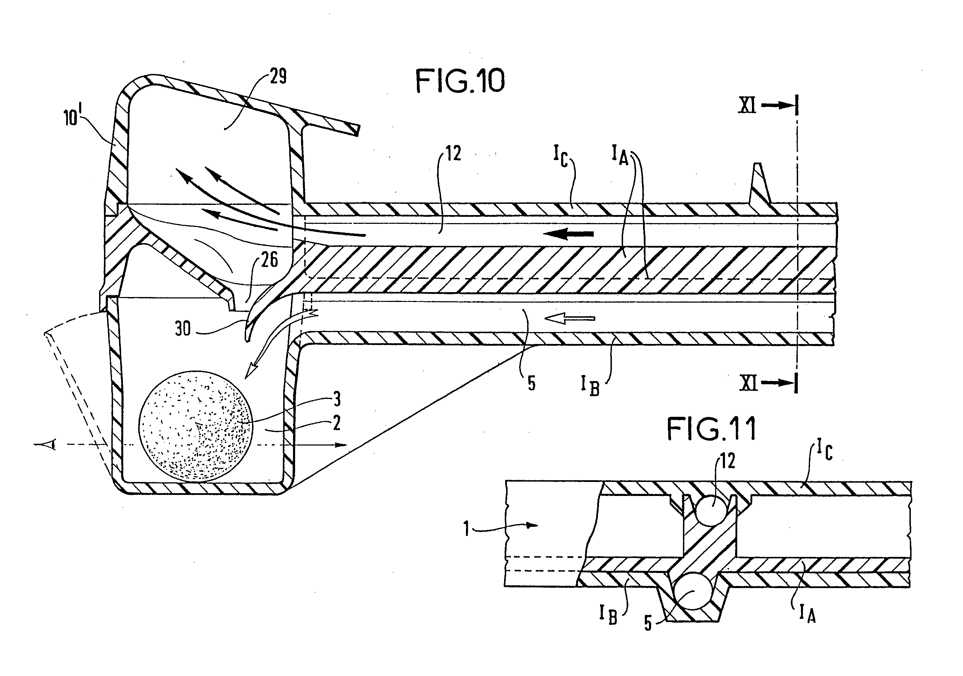

La référence 4 désigne un orifice central d'admission d'un liquide de lavage selon la flèche (D), orifice duquel partent des conduits radiaux 5 reliant ledit orifice central à chaque cellule périphérique 2. Les conduits sont disposés dans un plan essentiellement perpendiculaire à l'axe de rotation 6 du dispositif. Il est à noter que les conduits radiaux 5 sont définis par deux portions complémentaires formées sur les parties constitutives du rotor $I_A$ et $I_B$ (voir figures 3 et 10 par exemple), mais que tout autre type de conduit serait envisageable, tel par exemple, qu'un bord plat sur une partie du rotor et une rainure sur l'autre partie.

Chaque cellule 2 est par ailleurs munie d'un orifice périphérique 7 d'éjection de liquide, ici défini directement par superposition des bords périphériques des portions coaxiales IA, IB formant le rotor 1.

Cet orifice d'éjection vient terminer un déversoir 8, positionné à la partie postérieure de la cellule 2 par rapport au sens de rotation utilisé lors de l'introduction de liquide de lavage dans la cellule 2, et qui est symbolisé par la flèche (A).

La référence 9 désigne un orifice circulaire entourant concentriquement l'orifice 4 et par lequel est introduit le composé liquide contenant la substance analyser, selon la flèche (C).

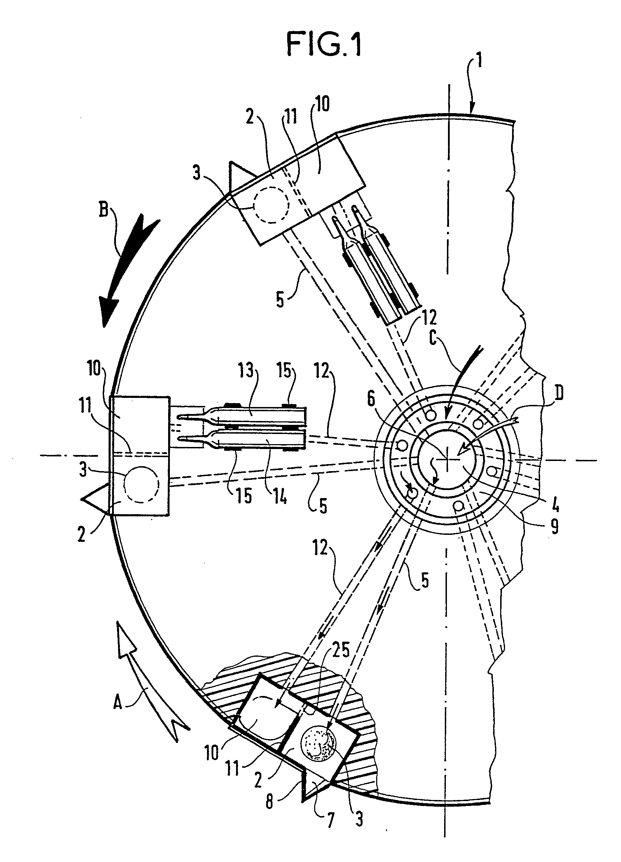

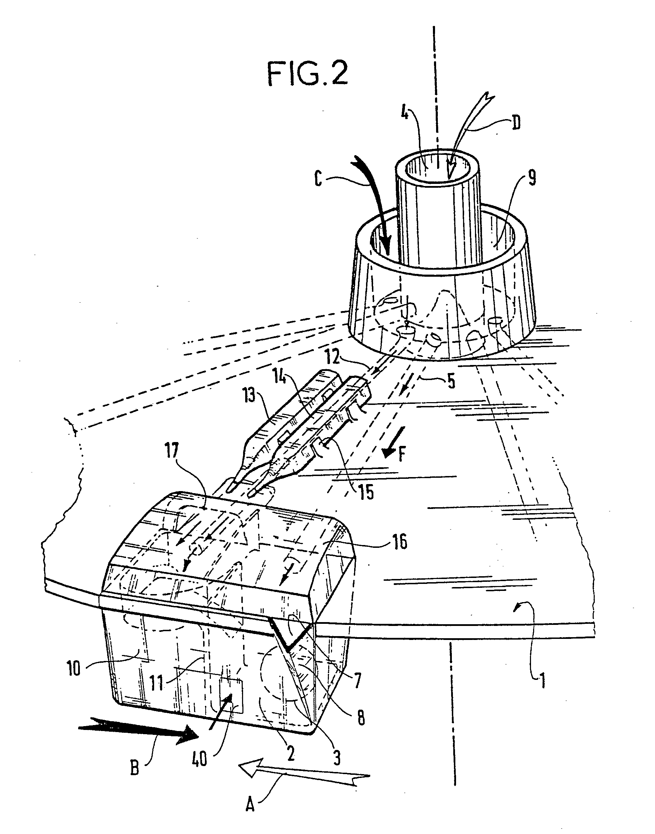

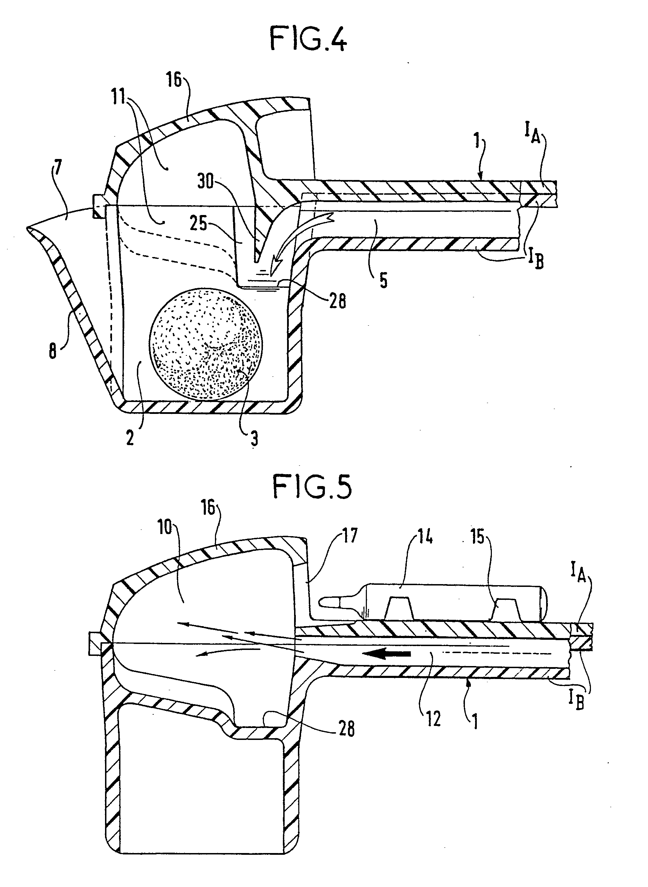

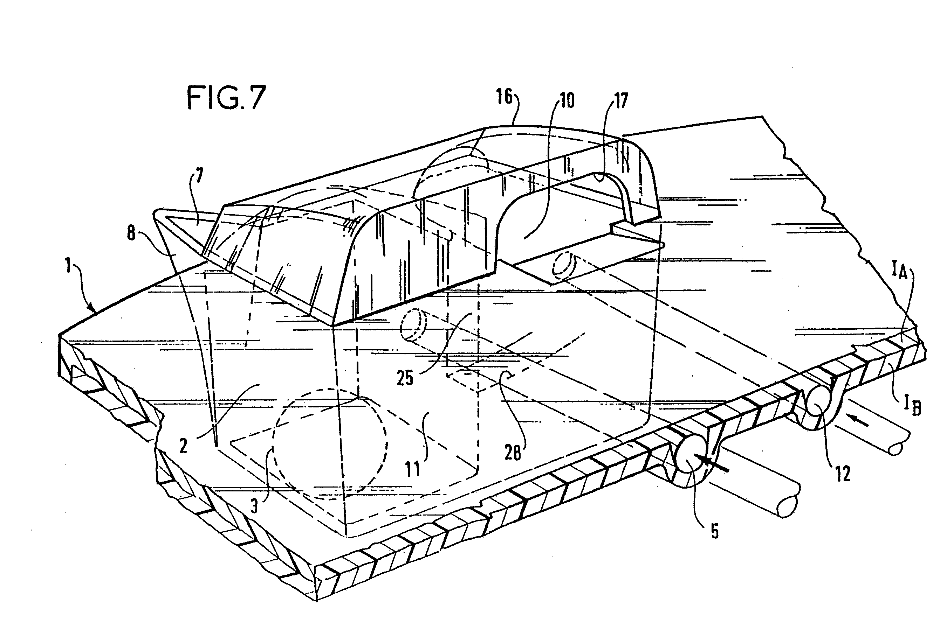

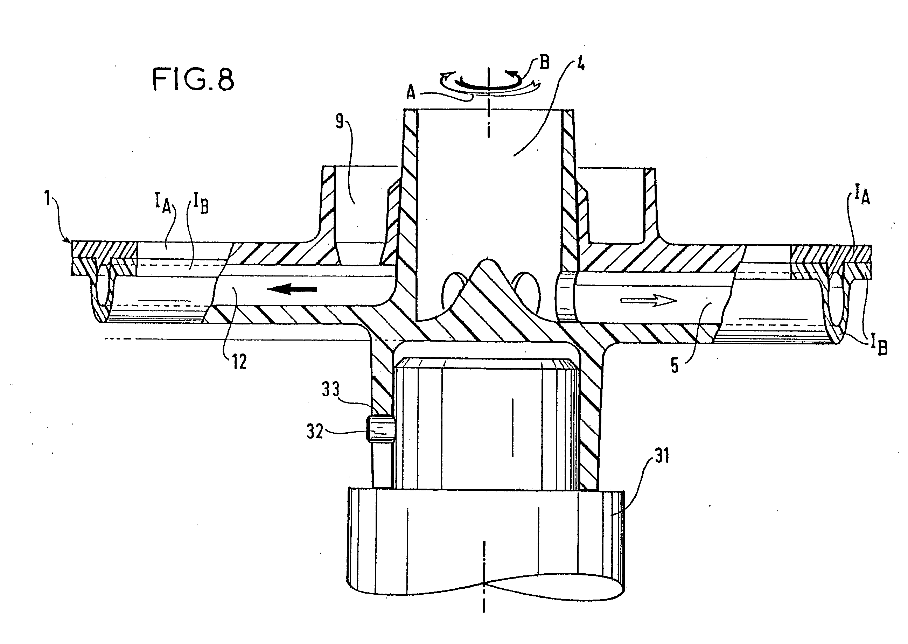

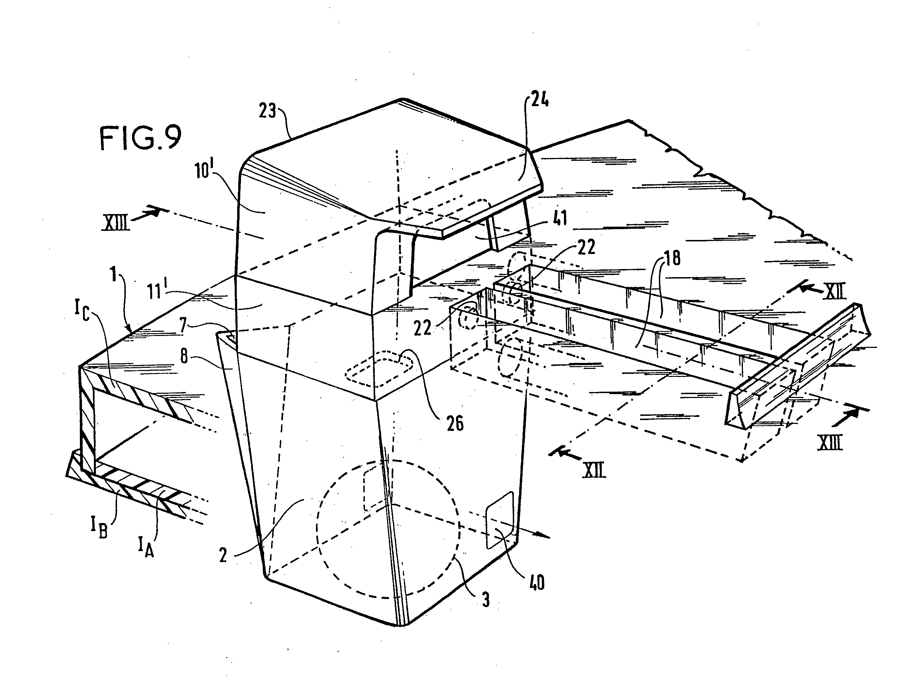

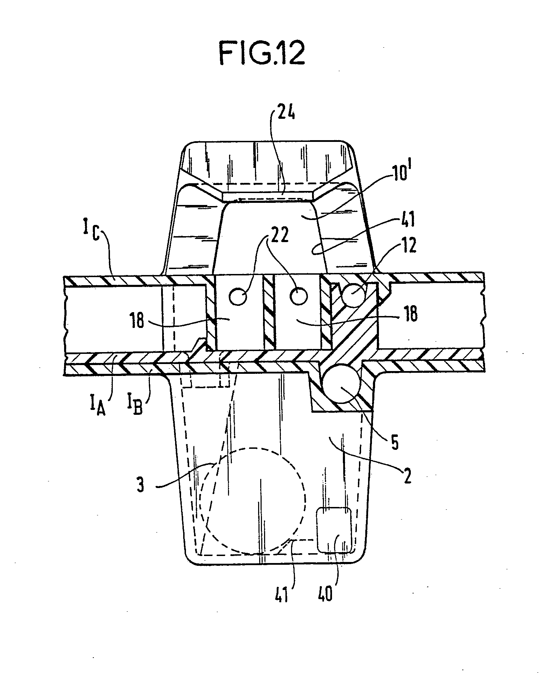

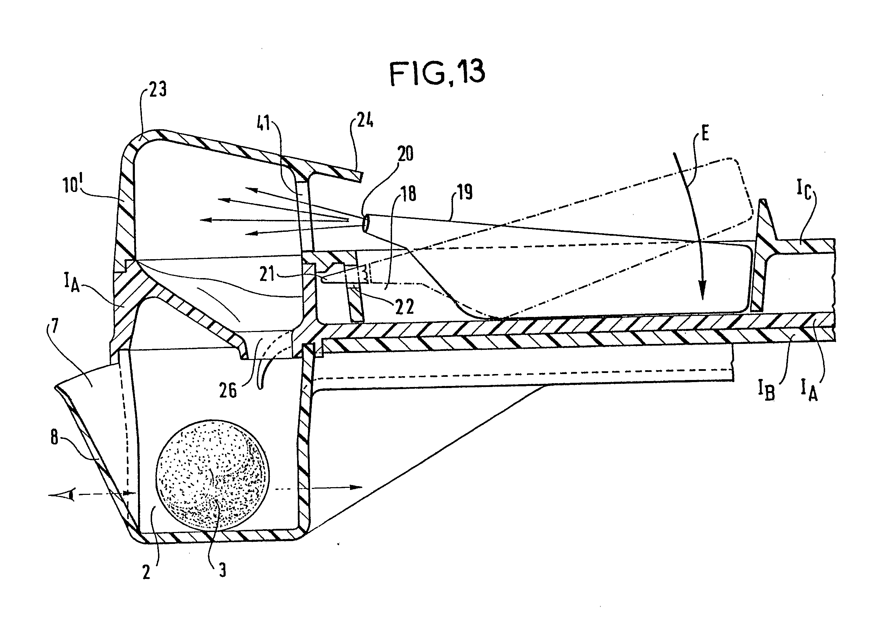

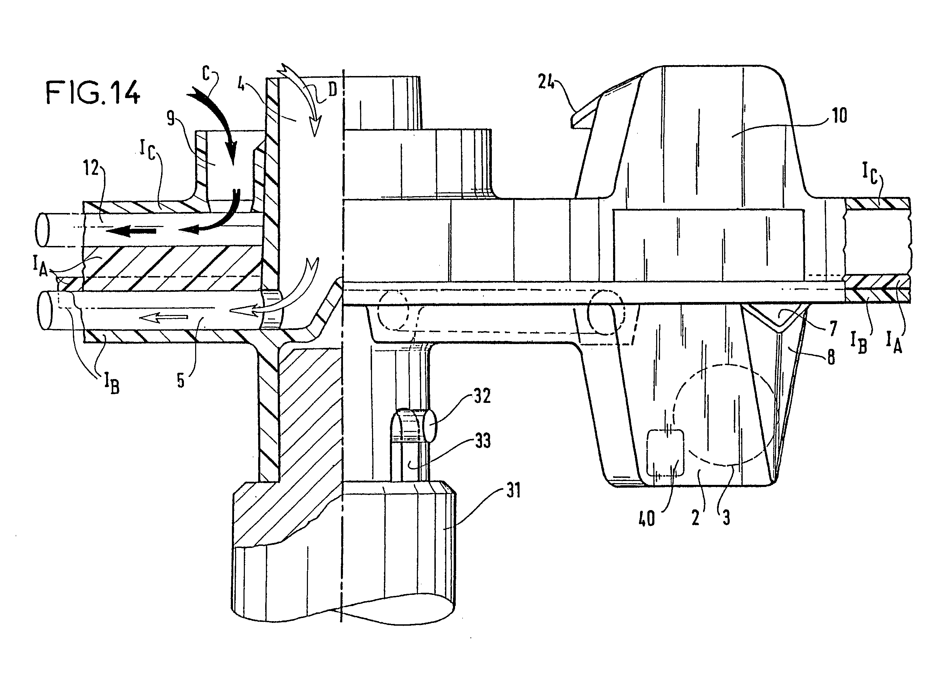

Chaque cellule 2 est couplée à une cellule de déversement 10 (figures 1 à 8) ou 10′ (figures 9 à 14) présentant une paroi commune 11 (figures 1 à 8) ou 11′ (figures 9 à 14) avec la cellule 2 contenant le support d'accrochage 3. Un passage entre les cellules 2 et 10 ou 2 et 10′ étant prévu au niveau de cette paroi 11 ou 11′.

Dans le cas du mode de réalisation représenté sur les figures 1 à 8 les cellules 2 et 10 sont juxtaposées, la paroi commune 11 les séparant étant une paroi radiale.

Dans le cas de mode de réalisation représenté sur les figures 9 à 14, les cellules 2 et 10′ sont superposées, la paroi commune 11′ étant constituée par la face supérieure des cellules 2.

Les cellules de déversement 10 et 10′ sont reliés à l'orifice concentrique 9 par des conduits radiaux 12.

Ces conduits comportent à leurs extrémités proches des cellules de déversement un étranglement capillaire précédé par une poche, et qui détermine un volume déterminée avec un obturateur insérable dans l'orifice 9 pour séparer celui-ci desdites poches.

Tout ce système, bien connu en lui-même, et que ne vise qu'à introduire dans les cellules 10 et 10′ un volume bien déterminé d'un liquide n'a pas été représenté sur les dessins pour des raisons de simplification.

Ces conduits radiaux 12 peuvent également être définis par des portions complémentaires formées sur les parties constitutives du rotor telles que $I_A$, $I_B$ sur les figures 1 à 8 et $I_A$, $I_C$ sur les figures 9 à 14, mais tout autre type de conduit serait envisageable.

La face supérieure du rotor est munie de moyens appropriés pour maintenir en place des récipients tels que des capsules, ampoules,... contenant des réactifs et disposés de telle manière que, par centrifugation et ouverture de ces récipients, les liquides qu'ils contiennent soient introduits dans les cellules de déversement 10 ou 10′.

Dans le mode de réalisation représenté aux figures 1 à 8, les récipients 13 et 14, contenant des réactifs sont maintenus sur la face supérieure du rotor par des supports de blocage tels que 15. Les cellules 2 et 10 associées sont obturés à leur partie supérieure par un couvercle 16 qui présente une ouverture 17 au regard des ouvertures des récipients 13 et 14.

Le dispositif d'analyse est muni de moyens appropriés, non représentés, et permettent l'ouverture des récipients 13 et 14; ces moyens peuvent agir par exemple par rayonnement, chauffage ou écrasement, et sont bien connus dans l'industrie de conditionnement des produits pharmaceutiques.

Dans le mode de réalisation représenté aux figures 9 à 14, les récipients contenant les réactifs sont maintenus dans des cases 18, dont l'orifice d'ouverture 20 est situé au niveau d'une partie allongée 21. Avant ouverture, l'extrémité de cette partie 21 est engagée dans ou ouverture appropriée 22 présentée par la face avant de la case 18.

Lorsqu'on désire ouvrir la capsule 19, on bascule vers le bas sa partie arrière, selon la flèche (E), et on provoque alors la rupture de la partie allongée 21 créant ainsi l'orifice 20. Le réactif est chassé par l'orifice 20 et pénètre alors dans une ouverture 41 ménagée dans le couvercle 23 de la cellule de déversement 10′.

Le couvercle 23 présente un léger rebord 24 surmontant l'orifice 21, et assurant que tout le liquide éjecté du récipient 19 pénètre bien dans la cellule de déversement 10′.

Bien entendu, on peut utiliser tout autre moyen approprié pour provoquer l'ouverture des récipients contenant les réactifs, et le maintien desdits récipients sur la face supérieure du rotor.

La paroi commune aux cellules de déversement et aux cellules contenant le support d'accrochage est munie d'un orifice permettant le passage de l'une à l'autre.

Dans le mode de réalisation représenté aux figures 1 à 8 correspondant au cas où cette paroi commune 11 est une paroi radiale, cet orifice, formé par une échancrure de la paroi 11 dans sa partie supérieure la plus proche de l'axe de rotation du dispositif, est désigné par la référence 25.

Dans le mode de réalisation représenté aux figures 9 à 14 correspondant au cas où cette paroi commune 11 est la face supérieure de la cellule 2, cet orifice est désigné par la référence 26.

Le profil interne des cellules de déversement (10 ou 10′) est tel que tout le liquide introduit dans lesdites cellules par centrifugation soit maintenu dans celle-ci sans pouvoir s'échapper vers la cellule 2, contenant le support d'accrochage 3, durant la centrifugation dans le sens (B) et qu'à l'arrêt de la centrifugation tout le liquide ainsi introduit dans la cellule de déversement (10 ou 10′) passe dans la cellule 2 contenant le support d'accrochage 3 au travers de l'orifice (25 ou 26).

Dans ce but, l'orifice 25 est disposé à un niveau supérieur au niveau atteint par le liquide dans la cellule 2 après déversement de la quantité retenue dans la cellule 10.

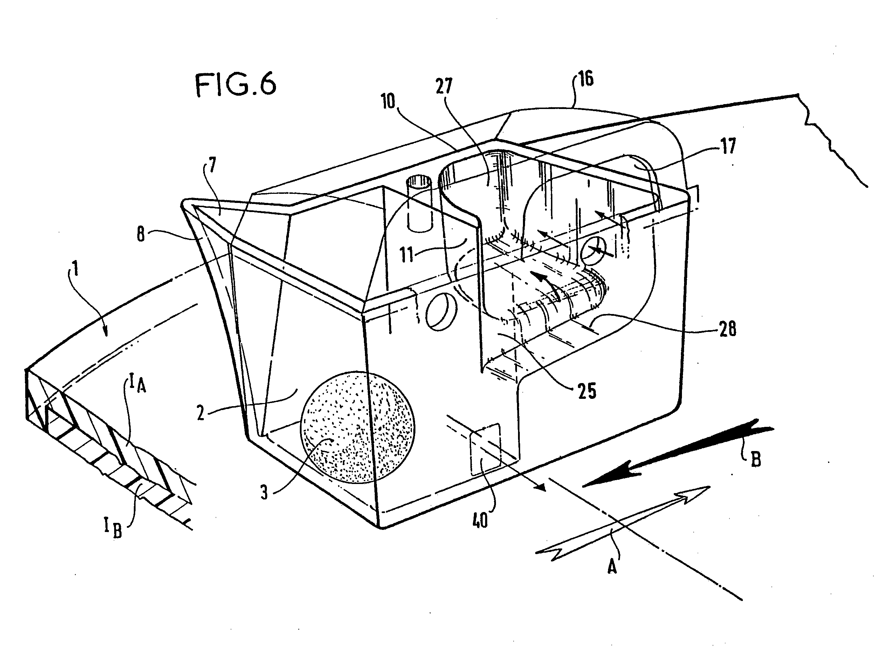

Comme on peut le relever sur la figure 6 la cellule de déversement 10 présente vers sa face externe une zone de retenue 27 surplombant une rampe d'évacuation 28 menant au niveau inférieur de l'orifice 25. Ainsi, après arrêt de la centrifugation, le liquide qui avait été retenu dans la zone 27 se déverse t-il dans la cellule 2 par l'intermédiaire de la rampe 28 et de l'orifice 25.

La cellule 10′ comporte également une zone de retenue 29 positionné à sa partie postérieure par rapport au sens de rotation (B) utilisé pour l'opération de remplissage des cellules de déversement.

La cellule 10' étant superposée à la cellule 2, le déversement du liquide qu'elle contient, à l'arrêt de la centrifugation, ne pose aucun problème.

Au voisinage de l'extrémité du conduit d'alimentation 5, débouchant dans la cellule 2 on prévoit une chicane 30 de manière à bien guider le liquide de lavage vers le fond de la cellule 2.

Le rotor 1 est mis en rotation par des moyens d'entraînement tout à fait classiques. La référence 31 désigne l'arbre rotatif qui porte un téton saillant 32 s'engageant dans une encoche appropriée 33 du rotor.

Le fonctionnement du dispositif est le suivant:

On introduit le liquide, tel que sérum ou plasma contenant la substance à analyser, dans l'orifice concentrique 9.

Un volume déterminé de ce liquide est alors emprisonné entre les étranglements capillaires prévus aux extrémités des canaux 12 et un bouchon que l'on insère dans l'orifice 9.

On procède ensuite à une centrifugation dans le sens (B). Le liquide contenant la substance à analyser, contenu dans les cannaux 12, est alors introduit dans les cellules de déversement (10 ou 10') et il y est maintenu tant que la centrifugation persiste.

A l'arrêt de celle-ci, le liquide pénètre dans les cellules 2 contenant le support d'accrochage 3 et on laisse reposer pendant le temps d'incubation nécessaire. Il est à noter que chaque cellule 2 présente un volume suffisant pour recevoir la bille et le liquide contenant la substance à analyser sans que le niveau de celui-ci atteigne les conduits 5.

Après cette phase d'accrochage par réaction antigène-anticorps, on chasse l'excès de liquide par centrifugation dans le sens (A) tout en introduisant par les canaux 5 un liquide de lavage, tel que de l'eau par exemple, contenu dans l'ouverture centrale 4.

Ce liquide de lavage vient laver énergiquement le support d'accrochage et s'échappe, ainsi que l'excès de liquide contenant la substance à analyser par l'orifice 7 situé à l'extrémité du déversoir 8.

On procède alors éventuellement à une phase de séchage en coupant l'admission du liquide de lavage tout en maintenant la centrifugation.

On procède ensuite à l'introduction d'un premier réactif contenu dans un des récipients fixés sur la paroi supérieure du rotor, tel qu'un polyglucoside.

Pour ce faire, la centrifugation étant effectuée dans le sens B on provoque par tout moyen approprié, non représenté et usuel dans l'industrie de conditionnement des produits pharmaceutiques, tel qu'indiqué ci-dessus, l'ouverture de l'orifice du récipient concerné. Le liquide s'échappe alors du récipient vers la cellule de déversement (10 ou 10') où il est maintenu tant que la centrifugation est effectuée dans le sens (B). A l'arrêt du mouvement rotatif le réactif passe de la cellule de déversement (10 ou 10') dans la cellule d'anlyse (2) et entre en contact avec le support d'accrochage modifié à la suite de la réaction antigène-anticorps précédente.

Après une nouvelle incubation, élimination de l'excès non fixé, lavage, séchage, suivant la nature du réactif introduit on peut alors procéder à une analyse directe par exemple au moyen d'un compteur Geiger, si le réactif contenait des radioisotopes on introduire par le même processus que décrit ci-dessus un deuxième réactif tel qu'un substrat développant une réaction colorée, permettant de mesurer l'activité enzymatique à l'aide d'un colorimètre ou photomètre. Pour faciliter ce type d'analyse, avantageusement les faces interne et externe des cellules d'analyse 2 sont parallèles, au moins au niveau d'un fenêtre de lecture référencée 40.

Dans le cas où le support d'accrochage est formé par une bille, des moyens tels que 41 sont prévus dans la cellule d'analyse pour que cette bille ne vienne pas au regard de la fenêtre de lecture.

Les supports d'accrochage disposés dans les différentes cellules d'analyse peuvent correspondre à des analyses différentes, qui sont donc effectuées en simultané à partir d'un même échantillon.

A titre d'exemple, le dispositif de l'invention permet d'obtenir rapidement et simplement les cinq dosages simultanés requis pour une analyse de thyroïde. La souplesse est aussi illustrée par la possibilité parmi d'autres de diviser le rotor en deux zones pour utiliser certaines cellules d'analyse comme étalons de contrôle, et de prévoir soit des supports d'accrochage identiques, ce qui permet d'effectuer un même test pour plusieurs clients, soit des supports différents.

Un dispositif conforme à l'invention peut être réalisé avec un très faible encombrement. Il peut présenter par exemple un diamètre de l'ordre de 8 cm.

**Revendications**

1. Dispositif d'analyse utilisant un support solide d'accrochage destiné à capter successivement une quantité d'un ligand contenu par exemple dans un liquide biologique à analyser, puis une quantité d'un réactif marqué, ledit dispositif comprenant un rotor d'analyse comportant d'une part une pluralité de cellules périphériques, contenant chacune ledit support d'accrochage, munies d'un orifice périphérique d'éjection de liquide, et d'autre part des moyens permettant l'acheminement d'un liquide de lavage vers chacune desdites cellules, caractérisée par le fait qu'à chaque cellule (2) contenant le support d'accrochage (3) est associée une cellule dite de déversement (10, 10'), ladite cellule, recevant au moins successivement le ligand et le réactif et présentant une paroi commune (11, 11') avec la cellule (2) contenant le support d'accrochage (3), un passage (25, 26) entre les deux cellules étant prévu au niveau de cette paroi, ledit réactif étant contenu dans un récipient approprié supporté par le dispositif d'analyse, des moyens étant prévus pour assurer l'ouverture dudit récipient et le déversement du réactif dans la cellule de déversement (10, 10').

2. Dispositif selon la revendication 1, caractérisé par le fait que les deux cellules (2, 10) sont juxtaposées, la paroi commune (11) séparant les deux cellules étant une paroi radiale.

3. Dispositif selon la revendication 1, caractérisé par le fait que les deux cellules (2, 10') sont superposées, la paroi commune étant constituée par la face supérieure de la cellule comportant le support d'accrochage.

4. Dispositif selon l'une des revendications précédentes, caractérisé par le fait que le profil interne des cellules de déversement (10, 10') est tel que tout liquide introduit dans ladite cellule par centrifugation soit maintenu dans celle-ci durant la centrifugation sans pouvoir s'échapper vers la cellule (2) contenant le support d'accrochage (3) et qu'à l'arrêt de la centrifugation tout le liquide introduit dans la cellule de déversement (10, 10') passe dans la cellule (2) contenant le support d'accrochage (3).

5. Dispositif d'analyse selon l'une des revendications précédentes, caractérisé par le fait que les moyens permettant l'acheminement du liquide de lavage sont essentiellement constitués par un orifice central d'admission (4) duquel partent des conduits radiaux (5) reliant ledit orifice central (4) aux cellules périphériques d'analyse (2) contenant le support d'accrochage (3).

6. Dispositif selon l'une des revendications précédentes caractérisé par le fait que le liquide contenant la substance à analyser est introduit par un orifice (9) concentrique à l'orifice d'admission (4) du liquide de lavage, des conduits radiaux (12) reliant ledit orifice aux cellules dites de déversement (10, 10').

7. Dispositif slon la revendication 6, caractérisé par le fait que les conduits radiaux (12) menant aux cellules de déversement (10, 10') comportant à leur extrémité proche de la cellule de déversement un étranglement capillaire précédé par un poche, ledit étranglement délimitant un volume déterminé avec un obturateur insérable dans l'orifice concentrique pour séparer celui-ci desdites poches.

8. Dispositif d'analyse selon l'une des revendications précédentes, caractérisé par le fait que le support d'accrochage (3) est formé par au moins une bille.

9. Dispositif d'analyse selon la revendication 8, caractérisé par le fait que le support (3) étant constitué par une pluralité de billes de très faibles dimensions, une barrière est disposée dans chaque cellule d'analyse en regard dudit orifice périphérique d'éjection, ladite barrière étant apte à retenir les billes au cours des opérations de centrifugation.

10. Dispositif selon la revendication 9, caractérisé par le fait que ladite barrière est du type filtre moléculaire.

11. Dispositif selon l'une des revendications 9 et 10, caractérisé par le fait que lesdites billes présentent un diamètre compris entre 10 et 20 microns sensiblement.

12. Dispositif selon l'une des revendications 1 à 7, caractérisé par le fait que le support d'accrochage est constitué par un revêtement déposé sur la portion inférieure de la paroi de la cellule d'analyse (2).

13. Dispositif d'analyse selon l'une des revendications précédentes, caractérisé par le fait que les faces interne et externe des cellules contenant le support d'accrochage sont sensiblement parallèles, au moins au niveau d'une fenêtre de lecture (40), la face externe présentant en outre un déversoir latéral (8) terminé par l'orifice d'éjection (7) et permettant l'évacuation totale du liquide de lavage lors de la centrifugation.

14. Dispositif d'analyse selon la revendication 13, caractérisé par le fait que ledit déversoir (8) est positionné à la partie postérieure de la cellule d'analyse (2) par rapport au sens de rotation (A) utilisé lors de l'opération de lavage.

15. Procédé de mise en oeuvre du dispositif d'analyse selon l'une des revendications précédentes, caractérisé par le fait que le liquide contenant la substance à analyser étant introduit par centrifugation dans une cellule de déversement (10, 10'), on stoppe la centrifugation permettant ainsi le déversement de toute la quantité de liquide introduite vers la cellule (2) contenant le support d'accrochage (3), puis après un temps approprié d'incubation, on élimine l'excès de liquide et on procède à un lavage par injection d'un liquide de lavage et centrifugation dans un sens contraire à celui intervenant lors du remplissage des cellules de déversement (10, 10') après séchage éventuel, on procède au remplissage par centrifugation des cellules de déversement (10, 10') par un premier réactif contenu dans un récipient supporté par le dispositif, puis, par arrêt de la centrifugation, au transvasement du réactif vers la cellule (2) contenant le support d'accrochage (3), ensuite, par centrifugation à l'élimination de l'excès du réactif et à un lavage, éventuellement suivi d'un séchage, ces dernières opérations pouvant être reprises avec un deuxième réactif.

**Patentansprüche**

1. Analysevorrichtung, die einen festen Adsorptionsträger verwendet, der nacheinander eine Menge eines z.B. in einer zu analysierenden biologischen Flüssigkeit enthaltenen Liganden und dann eine Menge eines markierten Reagenzstoffes festhält, wobei die Vorrichtung einen Analyserotor aufweist, der einerseits eine Vielzahl von peripheren Zellen, die je den Adsorptionsträger enthalten und mit einer peripheran Öffnung zur Entfernung der Flüssigkeit versehen sind, und andererseits Mittel enthält, die den Transport einer Waschflüssigkeit zu jeder der Zellen ermöglichen, dadurch gekennzeichnet, daß jeder Zelle (2), die den Adsorptionsträger (3) enthält, eine sogenannte Ausschüttungszelle (10, 10') zugeordnet ist, die mindestens hintereinander den zu analysierenden Liganden und den Reagenzstoff empfängt und eine gemeinsame Wand (11, 11') mit der den Adsorptionsträger (3) enthaltenden Zelle (2) aufweist, wobei eine Passage (25, 26) zwischen den beiden Zellen in Höhe dieser Wand vorgesehen ist, wobei der Reagenzstoff in einem entsprechenden Behälter enthalten ist, der von der Analysevorrichtung getragen wird, wobei Mittel vorgesehen sind, um die Öffnung dieses Behälters und das Ausschütten des Reagenzstoffes in die Ausschüttungszelle (10, 10') zu bewirken.

2. Vorrichtung nach Anspruch 1, dadurch gekennzeichnet, daß die beiden Zellen (2, 10) nebeneinanderliegen und die sie trennende gemeinsame Wand (11) eine radiale Wand ist.

3. Vorrichtung nach Anspruch 1, dadurch gekennzeichnet, daß die beiden Zellen (2, 10') übereinanderliegen und die gemeinsame Wand aus der Oberseite der Zelle besteht, die den Adsorptionsträger enthält.

4. Vorrichtung nach einem der vorstehenden Ansprüche, dadurch gekennzeichnet, daß das innere Profil der Ausschüttungszellen (10, 10') so ist, daß alle in die Zelle durch Zentrifugieren eingefüllte Flüssigkeit in dieser Zelle während des Zentrifugierens gehalten wird, ohne in die Zelle (2) fließen zu können, die den Adsorptionsträger (3) enthält, und daß bei Anhalten der Zentrifugierung die ganze in die Auschüttungszelle (10, 10') eingefüllte Flüssigkeit in die Zelle (2), die den Adsorptionsträger (3) enthält, fließt.

5. Analysevorrichtung nach einem der vorstehenden Ansprüche, dadurch gekennzeichnet, daß die Mittel, die den Transport der Waschflüssigkeit ermöglichen, im wesentlichen aus einer zentralen Einlaßöffnung (4) bestehen, von der radiale Kanäle (5) ausgehen, die die zentrale Öffnung (4) mit den peripheren Analysezellen (2) verbinden, die den Adsorptionsträger (3) enthalten.

6. Vorrichtung nach einem der vorstehenden Ansprüche, dadurch gekennzeichnet, daß die die zu analysierende Substanz enthaltende Flüssigkeit durch eine zur Einlaßöffnung (4) für die Waschflüssigkeit konzentrische Öffnung (9) eingeführt wird, wobei radiale Kanäle (12) diese Öffnung mit den sogenannten Ausschüttungszellen (10, 10') verbinden.

7. Vorrichtung nach Anspruch 6, dadurch gekennzeichnet, daß die zu den Ausschüttungszellen (10, 10') führenden radialen Kanäle (12) an ihrem nahe der Auschüttungszelle gelegenen Ende eine Tasche und dahinter eine Kapillarverengung aufweisen, wobei diese Verengung mit einem in die konzentrische Öffnung einfügbaren und diese Öffnung gegen die Taschen abtrennenden Verschluß ein bestimmtes Volumen begrenzt.

8. Vorrichtung nach einem der vorstehenden Ansprüche, dadurch gekennzeichnet, daß der Adsorptionsträger (3) aus mindestens einer Kugel besteht.

9. Analysevorrichtung nach Anspruch 8, dadurch gekennzeichnet, daß der Träger (2) aus einer Vielzahl von Kugeln sehr kleiner Abmessungen besteht und eine Barriere in jeder Analysezelle gegenüber der peripheren Ausgußöffnung angeordnet ist, wobei diese Barriere die Kugeln während der Zentrifugieroperationen zurückhält.

10. Vorrichtung nach Anspruch 9, dadurch gekennzeichnet, daß die Barriers vom Typ Molekularfilter ist.

11. Vorrichtung nach einem der Ansprüche 9 und 10, dadurch gekennzeichnet, daß die Kugeln einen Durchmesser von im wesentlichen zwischen 10 und 20 $\mu$m haben.

12. Vorrichtung nach einem der Ansprüche 1 bis 7, dadurch gekennzeichnet, daß der Adsorptionsträger aus einer Beschichtung besteht, die auf dem unteren Teil der Wand der Analysezelle (2) angebracht ist.

13. Analysevorrichtung nach einem der vorstehenden Ansprüche, dadurch gekennzeichnet, daß die Innen- und Außenseiten der den Adsorptionsträger enthaltenden Zellen im wesentlichen parallel sind, zumindest in Höhe eines Lesefensters (40), wobei die Außenseite außerdem eine seitliche Gießnase (8) aufweist, die in die Ausgußöffnung (7) mündet und das vollständige Ausleeren der Waschflüssigkeit während der Zentrifugierung ermöglicht.

14. Analysevorrichtung nach Anspruch 13, dadurch gekennzeichnet, daß die Gießnase (8) sich am hinteren Teil der Analysezelle (2) in bezug die während des Waschvorgangs verwendete Drehrichtung (A) befindet.

15. Verfahren zur Abwendung der Analysevorrichtung nach einem der vorstehenden Ansprüche, dadurch gekennzeichnet, daß die die zu analysierende Substanz enthaltende Flüssigkeit durch Zentrifugieren in eine Ausschüttungszelle (10, 10') eingeführt wird, daß dann die Zentrifugierung angehalten wird, um so das Umfüllen der ganzen Menge der eingeführten Flüssigkeit in die den Adsorptionsträger (3) enthaltende Zelle (2) zu ermöglichen, daß dann, nach einer angemessenen Inkubationszeit, der Überschuß an Flüssigkeit entfernt wird und eine Waschung durch Injektion einer Waschflüssigkeit und Zentrifugieren in Gegenrichtung zu der beim Füllen des Auschüttungszellen (10, 10') verwendeten Richtung durchgeführt wird, daß nach eventuellem Trocknen die Ausschüttungszellen (10, 10') durch Zentrifugieren mit einem ersten Reagenzstoff gefüllt werden, der in einem von der Vorrichtung getragenen Behälter enthalten ist, daß dann, durch Anhalten der Zentrifugierung, der Reagenzstoff in die Zelle (2) umgefüllt wird, die den Adsorptionsträger (3) enthält, und daß dann durch Zentrifugieren der Überschuß des Reagenzstoffes entfernt wird und ein Waschen, eventuell gefolgt von einem Trocknen, durchgeführt wird, wobei diese letzteren Operationen mit einem zweiten Reagenzstoff wiederholt werden können.

**Claims**

1. An analysis apparatus using a sold reaction support intended to hold successively a quantity of a ligand contained for example in a biological liquid to be analyzed, then a quantity of a labelled reagent, said device comprising an analysis rotor comprising on the one hand a plurality of peripheral cells, each containing said reaction support and supplied with a peripheral liquid ejection orifice, and on the other hand means allowing the transport of a washing liquid towards each one of said cells, characterized in that each cell (2) containing the reaction support (3) is associated with a cell called discharge cell (10, 10'), said cell receiving successively at least the ligand and the reagent and presenting a common wall (11, 11') with the cell (2) containing the reaction support (3), a passage (25, 26) between the two cells being provided at the level of this wall, said reagent being contained in an appropriate recipient supported by the analysis apparatus, means being provided to ensure the opening of said recipient and the discharge of the reagent into the discharge cell (10, 10').

2. An apparatus according to claim 1, characterized in that the two cells (2, 10) are juxtaposed, the common wall (11) separating the two cells being a radial wall.

3. An apparatus according to claim 1, characterized in that the two cells (2, 10') are superposed, the common wall being constituted by the upper face of the cell comprising the reaction support.

4. An apparatus according to one of the preceding claims, characterized in that the inner profile of the discharge cells (10, 10') is such that all liquid introduced into said cell by centrifugation is maintained in the latter during the centrifugation without being able to escape towards the cell (2) containing the reaction support (3), and that, when centrifuging is stopped, all the liquid introduced into the discharge cell (10, 10') passes into the cell (2) containing the reaction support (3).

5. An analysis apparatus according to one of the preceding claims, characterized in that the means allowing the transport of the washing liquid are essentially constituted by a central inlet orifice (4) from which extend radial pipes (5) connecting said central orifice (4) with the peripheral analysis cells (2) containing the reaction support (3).

6. An apparatus according to one of the preceding claims, characterized in that the liquid containing the substance to be analyzed is introduced by an orifice (9) which is concentric with the inlet orifice (4) of the washing liquid, radial pipes (12) connecting said orifice with the discharge cells (10, 10').

7. An apparatus according to claim 6, characterized in that the radial pipes (12) leading to the discharge cells (10, 10') comprise at their end near the discharge cell a capillar constriction preceded by a pocket, said constriction delimiting a determined volume with a shutter insertable into the concentric orifice in order to separate this orifice from said pockets.

8. An analysis apparatus according to one of the preceding claims, characterized in that the reaction support (3) is formed by at least one bead.

9. An analysis apparatus according to claim 8, characterized in that the support (3) being constituted by a plurality of beads of very small dimensions, a barrier is disposed in each analysis cell facing said peripheral ejection orifice, said barrier retaining the beads during the centrifuging operations.

10. An apparatus according to claim 9, characterized in that said barrier is of the molecular filter type.

11. An apparatus according to one of claims 9 and 10, characterized in that said beads present a diameter comprised between 10 and 20 $\mu$m

12. An apparatus according to one of claims 1 to 7, characterized in that the reaction support is constituted by a coating deposited on the lower portion of the wall of the analysis cell (2).

13. An analysis apparatus according to one of the preceding claims, characterized in that the inner and outer face of the cells containing the reaction support are essentially parallel, at least at the level of a reading window (40), the outer face presenting a lateral spout (8) ending in the ejection orifice (7) and permitting the total evacuation of the washing liquid during centrifugation.

14. An analysis apparatus according to claim 13, characterized in that the said spout (8) is positioned at the rear part of the analysis cell (2) with respect to the rotation direction (A) used during the washing operation.

15. A method for using the analysis apparatus according to one of the preceding claims, characterized in that the liquid containing the substance to be analyzed having been introduced by centrifugation into a discharge cell (10, 10'), the centrifugation is stopped, thus permitting the discharge of the whole quantity of introduced liquid towards the cell (2) containing the reaction support (3), then, after an appropriate incubation period, the exceeding liquid is eliminated and a washing is effected by injection of a washing liquid and centrifugation in a direction contrary to that intervening during the filling of the discharge cells (10, 10'), then after possible drying, the discharge cells (10, 10') are filled by centrifugation with a first reagent contained in a tank supported by the apparatus, then, by stopping the centrifugation, the reagent is decanted towards the cell (2) containing the reaction support (3), then, by centrifugation, the excess of the reagent is eliminated and a washing is carried out, possibly followed by a drying operation, it being possible to repeat these latter operations with a second reagent.

# FIG.1

FIG.2

FIG.3

# FIG.4

# FIG.5

4

FIG.6

0 054 262

FIG.7

0 054 262

FIG.8

FIG.9

0 054 262

8

FIG.10

FIG.11

# FIG.12

FIG,13

FIG.14